# EUROPEAN PATENT SPECIFICATION

(11) **EP 3 804 933 B1**
(45) Date of publication and mention of the grant of the patent: **21.02.2024**
(21) Application number: 19811220.3
(22) Date of filing: 10.04.2019
(51) Int. Cl.: B28D 7/00, B23Q 3/155, B28D 5/00, C03B 33/027, C03B 33/10

(54) **SCRIBE DEVICE AND TOOL CHANGE MECHANISM PROVIDED TO SCRIBE DEVICE**
RITZVORRICHTUNG UND WERKZEUGWECHSELMECHANISMUS DAFÜR
DISPOSITIF DE TRAÇAGE ET MÉCANISME DE CHANGEMENT D'OUTIL SITUÉ SUR LE DISPOSITIF DE TRAÇAGE

(30) Priority: 30.05.2018 JP 2018103608
(43) Date of publication of application: 14.04.2021
(73) Proprietor: Mitsuboshi Diamond Industrial Co., Ltd., Settsu Osaka 566-0034 (JP)
(72) Inventor: OKUDA, Osamu, Settsu city, Osaka 566-0034 (JP)
(74) Representative: TBK
(86) International application number: PCT/JP2019/015625
(87) International publication number: WO 2019/230204

(56) References cited:
- EP-A2- 0 970 924
- WO-A1-2019/208146
- JP-A- 2007 007 781
- JP-A- 2011 045 948
- JP-A- 2011 218 815
- JP-B2- 5 952 129
- TW-A- 201 404 741
- US-A1- 2012 214 654

## Description

### Technical Field

The present invention relates to a tool change mechanism for replacing a scribing tool.

### Background Art

Conventionally, in a flat panel display and so forth such as a liquid-crystal display panel and a liquid-crystal projector substrate, a mother glass substrate is laminated in a manufacturing process, and is then divided into a single panel of a predetermined size.

To divide this brittle material substrate such as a mother glass substrate, a scribe process of forming a scribe line (vertical crack) in that substrate and a break process of causing the vertical crack to completely penetrate are preformed. Of these, in the scribe process, a scribe apparatus is used.

In this scribe apparatus, a scribing tool using a scribing wheel or diamond point is provided. By that scribing tool, a vertical crack is formed on the brittle material substrate.

As a technique regrading a scribe apparatus for scribing a brittle material substrate, there is, for example, one disclosed in WO 2007 / 063 979 A1.

WO 2007 / 063 979 A1 has an object as follows. By using a chip holder (scribing tool) integrated with a chip (such as a scribing wheel), offset data is retained in the chip holder in code form, thereby solving problems such as, for example, burdens of operations of correcting an offset amount, erroneous attachment of a chip of a different type, and the occurrence of variability of the formation position of a scribe line.

Specifically, the chip is rotatably attached to the chip holder. The chip holder is configured to have a cylindrical shape, with its tip provided with an attachment part. An opening is provided to a holder joint, and the chip holder is absorbed by a magnet for attachment, thereby facilitating attachment and detachment. Also, on a surface of the chip holder, offset data of the chip is recorded as a two-dimensional code. At the time of replacing the chip holder, the offset data is read and inputted to the scribe apparatus, thereby cancelling an offset. This omits operation required in association with correction when the chip holder is attached or detached, thereby allowing chip replacement while the apparatus is stopped for a short period of time.

TW201404741A, from the same applicant, discloses a tool change mechanism according to the preamble of claim 1.

WO2019/208146A1, also from the same applicant, is a document pursuant to Article 54(3) EPC and further discloses a transfer nozzle which is configured to move a scribing tool between a remover and a cartridge, the transfer nozzle being configured to absorb the scribing tool in an air suction manner.

### Summary of Invention

### Technical Problem

The scribe apparatus disclosed in WO 2007 / 063 979 A1 has solved the above-described problems, and has gained popularity as an apparatus easy to use for a person skilled in the art.

However, requirements for the scribe apparatus are increasing year after year. For example, automatically replacing a scribing tool during operation to extend continuous operating time, reducing automatic replacement time to a short period of time to enhance productivity, and so forth are demanded.

Specifically, as for productivity, improvements for further enhancing productivity have been demanded, such as reduction in time taken for automatic replacement of a scribing tool, reduction in time for setting a cartridge where the scribing tool is accommodated, and extension of the length of the continuous operating time of the scribe apparatus when scribing tools are fully mounted on the cartridge.

Also, as for tool compatibility, improvements for further enhancing tool compatibility have been demanded, such as making, in addition to a scribing tool set as a standard and a scribe head having that scribing tool attached thereto, other scribing tools and scribe heads also available, and supporting also a tilted scribe head.

Also, as for fool-proof functionality (designing in consideration of safety so as not to let an operator perform erroneous operation or not to cause a hazardous situation even if a user performs erroneous operation), improvements for further enhancing fool-proof functionality have been demanded, such as, ensuring safety in the scribe apparatus when the cartridge is prepared and the cartridge is attached or detached, improvement in reliability at the time of automatic scribing tool replacement operation, and recognition that a predetermined scribing tool is attached to allow correct operation.

Thus, in view of the above-described problems, an object of the present invention is to provide a scribe apparatus and a tool change mechanism included in the scribe apparatus capable of further improving productivity, tool compatibility, and fool-proof functionality.

### Solution to Problem

The above object is solved by a tool change mechanism according to claim 1 and a scribe apparatus according to claim 2. The scribe apparatus according to the present invention has mount means where a brittle material substrate is mounted, a scribe head provided so as to be opposed to the brittle material substrate on the mount means, a holder joint provided at a tip of the scribe head, a scribing tool removably attached to the holder joint and including a scribing wheel which forms a scribe line on the brittle material substrate on the mount means, and a tool change mechanism which performs tool replacement by removing the scribing tool after use from the holder joint and attaching another scribing tool to the holder joint, wherein the tool change mechanism has a remover which removes the scribing tool from the holder joint, a cartridge having a plurality of said scribing tools accommodated therein, and a transfer nozzle which moves the scribing tool between the remover and the cartridge, and the transfer nozzle is configured to absorb the scribing tool in an air suction manner.

According to the invention, the transfer nozzle includes a tool absorbing part capable of absorbing the scribing tool and moving to a vertical direction, a suction tube capable of suctioning air from inside the tool absorbing part, an absorbing part support body which movably supports the tool absorbing part to the vertical direction, and a lifting part which causes the tool absorbing part to ascend and descend to the vertical direction with respect to the absorbing part support body.

Preferably, the lifting part has a cylinder chamber formed inside the lifting part, a syringe arranged in the cylinder chamber so as to be movable in the vertical direction and extending downward to be coupled to an upper part of the tool absorbing part, an upper piping supplying air to an upper side of the syringe in the cylinder chamber, and a lower piping supplying air to a lower side of the syringe in the cylinder chamber.

Preferably, the tool absorbing part has a concave part open downward at a lower end of the tool absorbing part, and the concave part is formed in a shape corresponding to a base end side of the scribing tool. The tool change mechanism included in the scribe apparatus according to the present invention is a too change mechanism which performs tool replacement by removing a scribing tool attached to a holder joint provided at a tip of a scribe head of a scribe apparatus from the holder joint and attaching another scribing tool to the holder joint, the mechanism including a remover which removes the scribing tool from the holder joint, a cartridge having a plurality of said scribing tools accommodated therein, and a transfer nozzle which moves the scribing tool between the remover and the cartridge, wherein the transfer nozzle is configured to absorb the scribing tool in an air suction manner.

### Advantageous Effects of Invention

According to the present invention, productivity, tool compatibility, and fool-proof functionality can be further improved.

### Brief Description of Drawings

FIG. 1 is a perspective view schematically depicting a general outline of a scribe apparatus of the present invention.
FIG. 2 is a side view of the scribe apparatus viewed from A (Y direction plus side).
FIG. 3 is a B-B cross-sectional view of the scribe apparatus.
FIG. 4 is a side view schematically depicting a general outline of a scribe head (enlarged C part).
FIG. 5 is a perspective view schematically depicting a general outline of a transfer nozzle for transferring a scribing tool.
FIG. 6 is an D-D cross-sectional view of the transfer nozzle.
FIG. 7 is a plan view of the transfer nozzle.
FIG. 8 is an E-E cross-sectional view of the transfer nozzle.
FIG. 9 is an F-F cross-sectional view of the transfer nozzle.
FIG. 10 is a diagram depicting a situation in which a tool absorbing part of the transfer nozzle moves (movement amount in a z-axis direction).

### Description of Embodiment

In the following, an embodiment of a scribe apparatus 1 and a tool change mechanism 30 included in the scribe apparatus 1 according to the present invention are described with reference to the drawings.

Note that the embodiment described below is one example embodying the present invention and this specific example does not limit the structure of the present invention. Also, as for the drawings, for the purpose of viewability, components are rendered as being partially omitted. Furthermore, an x-axis direction, a y-axis direction, a z-axis direction, and so forth in the scribe apparatus 1 are as depicted in the drawings.

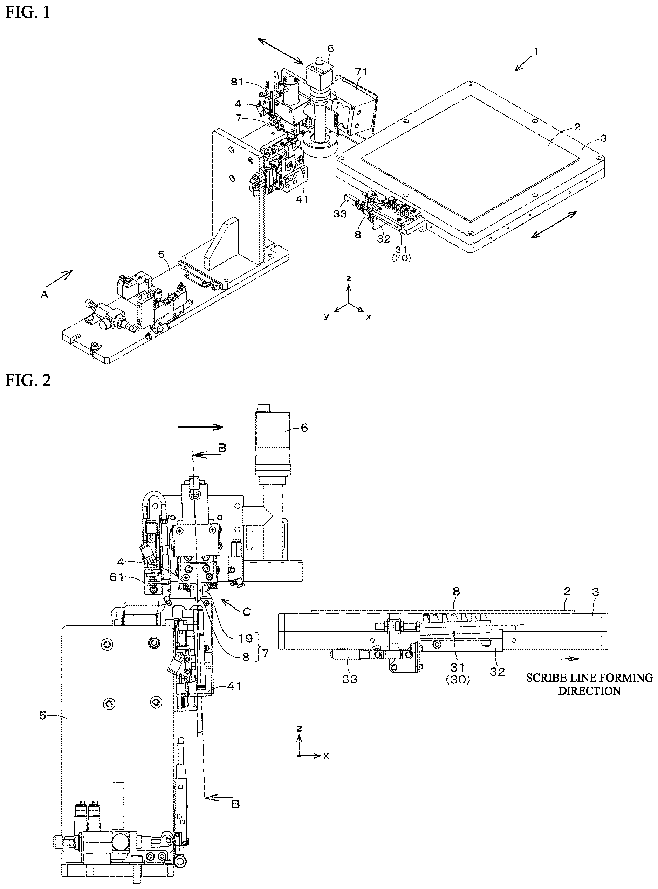

FIG. 1 to FIG. 3 are schematic diagrams of the scribe apparatus 1 according to the present invention.

The scribe apparatus 1 according to the present invention has a table (mount means) 3 where a brittle material substrate 2 is mounted, a head unit 4 which forms a scribe line (vertical crack) on the surface of the brittle material substrate 2, and a block body 5 where a remover and so forth are arranged.

Note that a direction of forming a scribe line is the x-axis direction from the left side to the right side in FIG. 2.

The table 3 is supported from below by a supporting part (not depicted) with a motor incorporated therein. The supporting part is mounted on a movable carriage. The movable carriage is held so as to be movable along paired guide rails to the y-axis direction. This movable carriage is screwed with a ball screw and, with the ball screw rotating by driving of the motor, moves along the guide rails to the y-axis direction.

The motor (not depicted) in the supporting part is to rotate the table on an x-y plane for positioning at a predetermined angle. The brittle material substrate 2 mounted on the table 3 is held by a vacuum suction means or the like. Also, a camera 6 for taking an image of an alignment mark on the brittle material substrate 2 is provided to an upper part of the scribe apparatus 1.

In the scribe apparatus 1, a beam (not depicted) is laid by a pole along the x-axis direction so as to go across the movable carriage and the table 3 thereabove.

The head unit 4 can move to the x-axis direction along a guide (not depicted) provided to the beam by driving of the motor. At a tip part of the head unit 4, a scribe head 7 is attached. Furthermore, the head unit 4 can also move to the z-axis direction.

As depicted in FIG. 2, the head unit 4 is placed as being tilted so as to slightly fall down into the direction of forming a scribe line. In the present embodiment, the head unit 4 is placed as being tilted rearward by 2° with respect to the direction of forming a scribe line (traveling direction).

The scribe head 7 has a scribing tool 8 which forms a scribe line on the surface of the brittle material substrate 2 and a holder joint 19 which removably holds the scribing tool 8. Furthermore, in addition to the movement of the entire head unit 4 to the z-axis direction, even only the scribe head 7 can also move to the z-axis direction.

This scribe head 7 is also placed as being tilted so as to slightly fall down into the direction of forming a scribe line (left side→right side in FIG. 2, the x-axis direction). In the present embodiment, the scribe head 7 is placed as being tilted rearward by 2° with respect to the direction of forming a scribe line.

Here, a y-axis moving part which moves the table 3 to the y-axis direction is formed of the paired guide rails which guide the movable carriage, the ball screw screwed into the movable carriage, and the motor which rotates the ball screw.

Also, an x-axis moving part which moves the head unit 4 to the x-axis direction is formed of the beam going across and above the table 3, a pole supporting the beam, and the guide which guides the head unit 4. Also, the motor in the supporting part is a rotating part which rotates the table 3.

These y-axis moving part, x-axis moving part, and rotating part configure a relative moving part.

Next, the structure of the scribing tool 8 to be attached to the holder joint 19 is described.

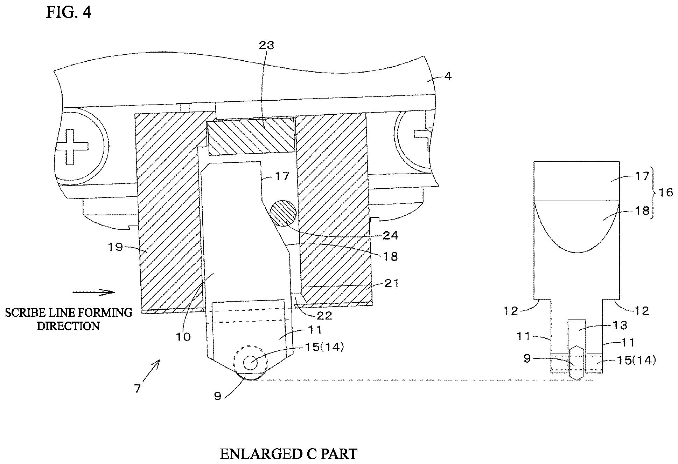

FIG. 4 is a diagram depicting the scribing tool 8 and its attached state. Note in the following description that the scribing tool 8 may be simply referred to as a tool.

The tool 8 has a scribing wheel 9 which forms a scribe line (vertical crack) on the brittle material substrate 2 and a main body part 10 which supports the scribing wheel 9.

Note in the following description that the scribing wheel 9 may be simply referred to as a wheel.

As with the scribe head 7, the tool 8 is also tilted so as to slightly fall down into the direction of forming a scribe line (left side→right side in FIG. 2, the x-axis direction). In the present embodiment, the tool 8 is placed as being tilted rearward by 2° with respect to the direction of forming a scribe line.

With the tool 8 (scribe head 7) placed as being tilted in this manner, a desired scribe line can be formed on the surface of the brittle material substrate 2. Also, shavings at the time of formation of a scribe line can be reduced.

The main body part 10 is a member in a substantially columnar shape, and is provided, on tis one end (tip) side, with vertically-cutout flat side wall surface parts 11. The side wall surface parts 11 are provided in a pair so as to face each other. Above the side wall surface parts 11, a hood part 12 bulging outward in a radial direction is formed. Note that a two-dimensional code, which will be described further below, is printed on either of the side wall surface parts 11.

Between the paired side wall surface parts 11, a notched part 13 parallel to those side wall surface parts 11 is provided.

Also, at each of lower ends of the paired side wall surface parts 11, a pin groove 14 in a direction orthogonal to that surface is provided. Those paired pin grooves 14 face each other and are provided so as to penetrate through the notched part 13. In that notched part 13, the scribing wheel 9 is arranged.

The wheel 9 is a disk-shaped member, has a circumference portion whose cross section is in a triangular shape, and has a through hole at the center. The wheel 9 has a size on the order such that, for example, its diameter is 2.5 mm and its thickness is 0.5 mm.

The wheel 9 is rotatably supported about an axial center of a pin inserted in a hole part with the center of the pin groove 14 and the center of the through hole aligned together.

On the other hand, on the other end (base end) side of the main body part 10, an attachment part 16 for positioning is provided. The attachment part 16 is formed by notching the main body part 10, and has a flat surface 17 and a tilted surface 18.

The flat surface 17 is formed at the base end of the main body part 10, and is set to be a surface in a direction orthogonal to the side wall surface parts 11. The tilted surface 18 is set to be a surface tilted downward from the flat surface 17 to a radially outward direction. These flat surface 17 and tilted surface 18 are provided in sequence.

The main body part 10 has a shape tapered upward from a midway part in the longitudinal direction. Note that the base end (upper part) of the main body part 10 is configured of a magnetic metal.

The wheel 9 and the main body part 10 are integrated in this manner to form the tool 8. That is, the tool 8 integrated by inserting the pin 15 into the pin grooves 14 to rotatably support the wheel 9 is replaced without being removed.

The tool 8 including the wheel 9 is attached to the scribe head 7 and, by a lifting part provided inside the head unit 4, a lifting motion is performed. Note that an example of the lifting part is a ball screw or the like.

By a pressuring mechanism separate from that lifting part, the wheel 9 having a pointed portion is rolled as being in pressure contact with the surface of the brittle material substrate 2 with an appropriate load, thereby forming a scribe line. A cylinder giving a pressure for pushing the tool 8 and means which drives the entire scribe head 7 are separately provided.

Next, the holder joint 19 is described.

The holder joint 19 has an upper part formed of a columnar member and a lower part formed of a cylindrical member. Note that the holder joint 19 is set to be a cylindrical shape with its lower part larger than its upper columnar member.

As with the scribe head 7, the holder joint 19 is also tilted so as to slightly fall down into the direction of forming a scribe line (left side→light side in FIG. 2, the x-axis direction). In the present embodiment, the holder joint 19 is placed as being tilted rearward by 2° with respect to the direction of forming a scribe line.

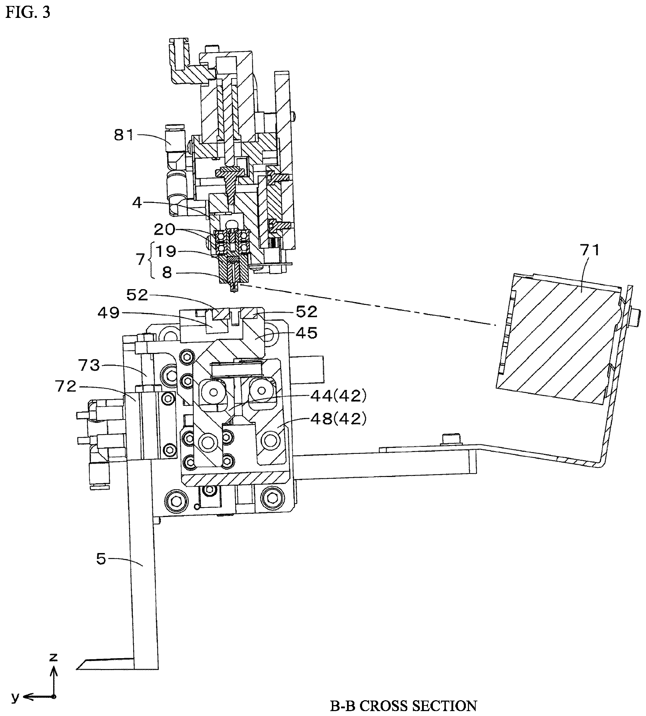

The holder joint 19 has, at its upper part, a bearing 20 attached as fitting therearound and, by that bearing 20, is supported so as to be rotatable about an axial center in a substantially vertical direction (refer to FIG. 3).

The lower part of the holder joint 19 forms a holding part 21 which holds the tool 9, and has a cylindrically-shaped opening 22 formed therein. At an upper end of that opening 22, a magnet 23 is buried.

Also, inside the opening 22, a parallel pin 24 in a direction orthogonal to the center axis is provided at a position away from the center axis. The parallel pin 24 is to position the tool 8 by making contact with the tilted surface 18 of the tool 8, that is, to set the direction of the wheel 9 to a correct direction.

When the tool 8 is attached to the holder joint 19, the tool 8 is inserted from an attachment part 16 side into the opening 22 of the holder joint 19. Then, the tip (base end) side of the tool 8 configured of a magnetic metal is attracted by the magnet 23 to be fixed to the holder joint 19.

Furthermore, the flat surface 17 becomes oriented to a parallel pin 24 side, and the tilted surface 18 makes contact with the parallel pin 24 to be positioned and fixed. That is, since the flat surface 17 and the tilted surface 18 are oriented only to one direction, the direction of wheel 9 is set to be a predetermined direction.

This tool 8 is merely attracted by the magnet 23 and fixed to the holder joint 19, and is thus extremely easily attached and detached. That is, when attached, the tool 8 is attracted and is thereby fixed at a predetermined position and, also when replaced, the tool 8 can be easily detached only by being pulled. The tool 8 can be also manually attached and detached.

The magnet 23 is set to pull the tool 8 when positioned 3 mm to 4 mm back from a final set position of the holder joint 19.

Meanwhile, the scribe apparatus 1 of the present invention has a tool change mechanism 30 which removes the scribing tool 8 after use from the holder joint 19 and attaches another scribing tool 8 to the holder joint 19 to automatically perform tool replacement.

The tool change mechanism 30 has a cartridge 31 where the tool 8 is accommodated, a remover 41 which removes the tool 8 from the holder joint 19, and a transfer nozzle 81 which moves the tool 8 between the scribe head 7 and the cartridge 31. The present invention is characterized in the transfer nozzle 81 included in the scribe apparatus 1. In the following, prior to description of the transfer nozzle 81, the cartridge 31 and the remover 41 are briefly described.

As depicted in FIG. 1 and FIG. 2, the cartridge 31 is a flat-plate-shaped member arranged on a side of the table 3 to accommodate a plurality of tools 8.

In detail, the cartridge 31 is a member attached to a base 32 provided on a side wall surface of the table 3 and, in the present embodiment, is provided to a side wall surface of the table 3 on an origin side of the head unit 4.

The cartridge 31 is placed as being tilted to the left of FIG. 2 in the x-axis direction, in accordance with the tilt of the scribe head 7. In the present embodiment, the cartridge 31 is placed also as being tilted by 2°.

The cartridge 31 is removably arranged on a side of the table 3 by using fastening hardware such as a clamp 33 or a lock member. In detail, in a planar view, a plurality of accommodating parts which accommodate the tools 8 for replacement are provided at the center of the cartridge 31 in the y-axis direction. These accommodating parts are provided so as to be aligned along the x-axis direction in the cartridge 31. In the present embodiment, the plurality of these accommodating parts are placed in a two-row state.

The remover 41 is a member which temporarily picks up and holds the scribing tool 8 after use removed from the holder joint 19. This remover 41 is provided to an upper part of the block body 5, and is enabled in a vertical direction. That is, the remover 41 is configured to be able to move along the Y-axis direction and, by moving to the Y-axis direction, approach below the holder joint 19 provided to the head unit 4.

The remover 41 is also tilted so as to slightly fall down with respect to the z axis, in accordance with the tilt of the scribe head 7 (tool 8). In the present embodiment, the remover 41 is placed as being tilted rearward by 2° with respect to the direction of forming a scribe line (traveling direction). Specifically, the remover 41 has paired holding arms 42, 42 having a holding part 43 which nips and holds the scribing tool 8 after use (old tool 8a). These paired holding arms 42, 42 are configured to be able to ascend and descend to the vertical direction, and it is configured such that a second holding arm 48 is arranged "on a right side in the x-axis direction" of a first holding arm 44.

These first holding arm 44 and second holding arm 48 are each formed in a crank shape with its midway side being bent. And, these first holding arm 44 and second holding arm 48 are arranged with their nail parts 45 and 49 overlapping so as to cross each other. To each of the nail parts 45 and 49, a cushion material 52 formed of polyurethane or the like is attached, thereby allowing the scribing tool 8 to be picked up without being damaged.

Also, the holder joint 19 is made movable in the vertical direction by a lifting member 61 provided inside the head unit 4. Therefore, when the holder joint 19 is horizontally moved above the remover 41 and is caused to descend, the remover 41 can nip the scribing tool 8 after use (old tool 8a). Specifically, in the remover 41, first, the two holding arms, the first holding arm 44 and the second holding arm 48, are caused to ascend to become open. When those first holding arm 44 and second holding arm 48 are caused to swing to an approaching direction, the tool 8 after use (old tool 8a) is nipped between the nail parts 45 and 49. Furthermore, when the remover 41 is caused to descend, the old tool 8a is pulled out from the holder joint 19, and the first holding arm 44 and the second holding arm 48 nip and hold the old tool 8a.

That is, with the first holding arm 44 and the second holding arm 48 caused to descend as nipping the old tool 8a, the old tool 8a can be pulled away from the holder joint 19 against the magnetic force of the magnet 23 buried at the upper end of the opening of the holder joint 19. The old tool 8a pulled away in this manner is left on the remover 41, with a lower end side nipped between the nail parts 45 and 49 and with a base end side oriented upward.

On the other hand, when a new scribing tool 8 (new tool 8b) is transferred from the remover 41 to the holder joint 19, first, the holder joint 19 is horizontally moved and is caused to descend closer to the remover 41 holding the new tool 8b. That remover 41 is caused to ascend, and the new tool 8b is inserted into the holder joint 19. Then, the first holding arm 44 and the second holding arm 48 immediately swing to a leaving direction, thereby causing the new tool 8b to go away from the remover 41 and causing the new tool 8b to be positioned and fixed by the magnetic force of the magnet 23 inside the holder joint 19.

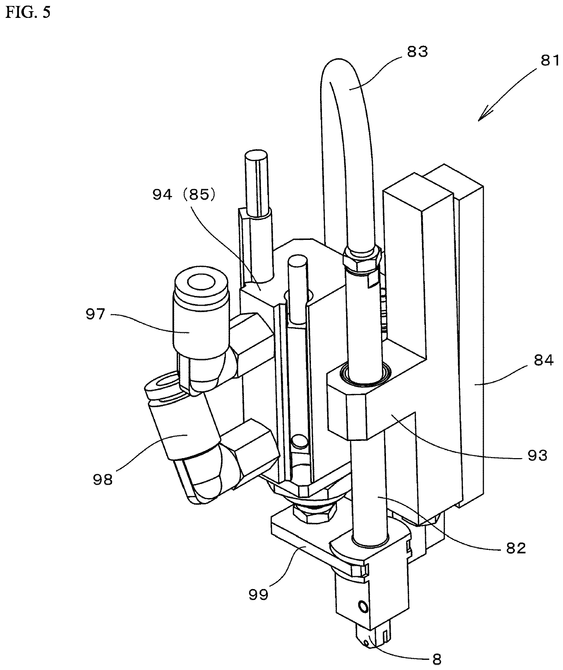

And, when the holder joint 19 is caused to ascend by using the lifting member 61, the new tool 8b comes to move integrally with the holder joint 19. Meanwhile, as depicted in FIG. 5, the transfer nozzle 81 of the present embodiment is a member which receives the scribing tool 8 after use (old tool 8a) from the above-described remover 41 and passes a new scribing tool 8 (new tool 8b) to the remover 41.

As with the head unit 4, the transfer nozzle 81 is also placed as being tilted so as to slightly fall down to the direction of forming a scribe line. In the present embodiment, the transfer nozzle 81 is placed as being tilted rearward by 2° with respect to the direction of forming a scribe line (traveling direction). Specifically, the transfer nozzle 81 of the present embodiment includes a tool absorbing part 82 capable of absorbing the scribing tool 8 and moving to the vertical direction, a suction tube 83 capable of suctioning air from inside the tool absorbing part 82, an absorbing part support body 84 which movably supports the tool absorbing part 82 to the vertical direction, and a lifting part 85 which causes the tool absorbing part 82 to ascend and descend to the vertical direction with respect to the absorbing part support body 84.

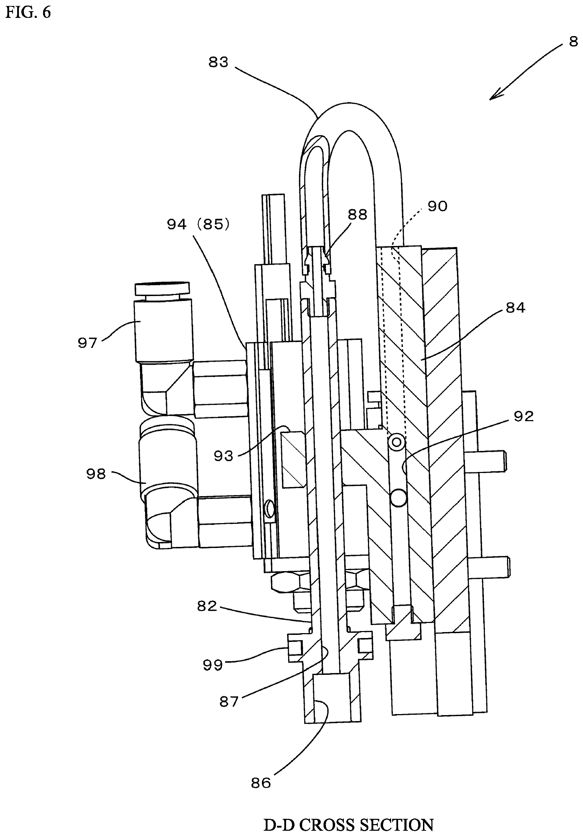

As depicted in FIG. 6, the tool absorbing part 82 is a cylindrical-rod-shaped member elongated to the vertical direction. On a lower end side of the tool absorbing part 82, a concave part 86 (a part for accommodating a base end of the scribing tool 8) open downward is formed. This concave part 86 is formed in a shape corresponding to the base end side of the scribing tool 8, and can cover the base end side of the scribing tool 8 from above so as to surround this base end side.

Also, inside the tool absorbing part 82, a through hole 87 is formed, vertically penetrating through the inside of the tool absorbing part 82. A lower end of this through hole 87 is open to an upper part of the concave part 86, and an upper end of the through hole 87 is open through the inside of the tool absorbing part 82 to an upper part of the tool absorbing part 82. At an upper part of this tool absorbing part 82, a retaining protrusion 88 is formed, which inhibits the suction tube 83 from easily coming out, and the suction tube 83 is attached so as to cover the retaining protrusion 88 from above.

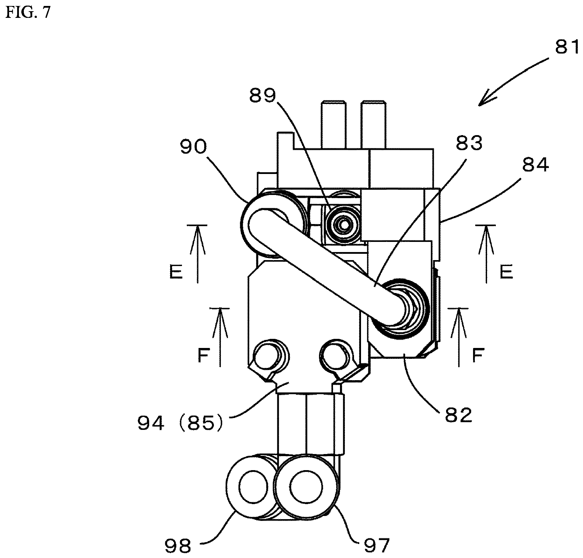

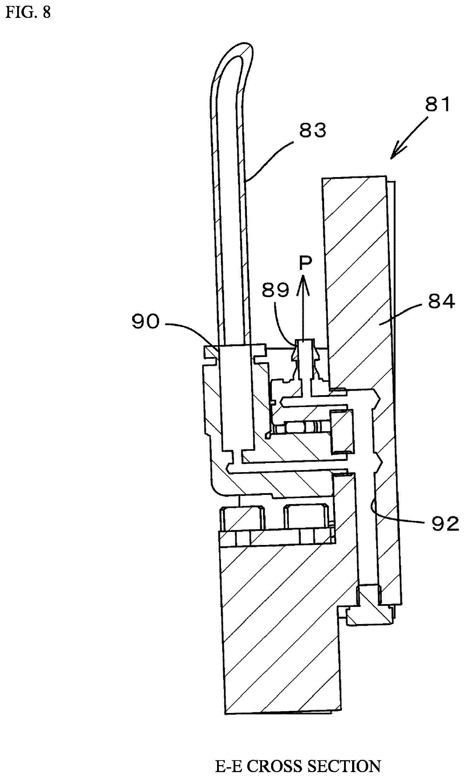

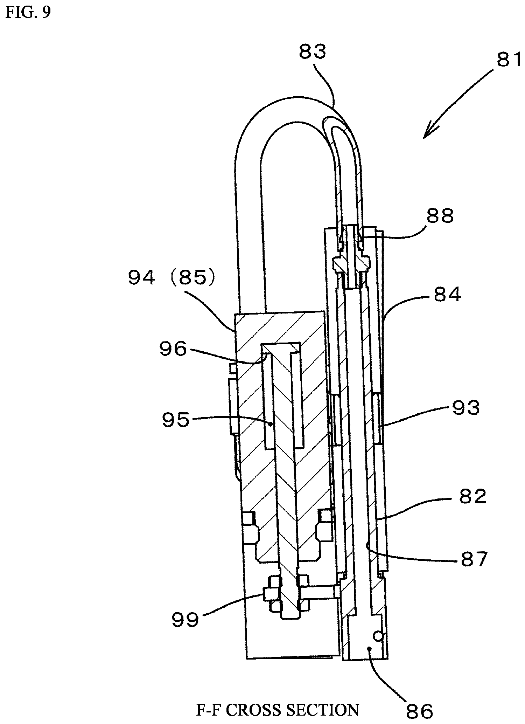

As depicted in FIG. 7 to FIG. 9, the suction tube 83 is a tubular member formed of an elastic material such as rubber or an elastomer so as to be freely bent. One end of the suction tube 83 is connected to an upper part of the tool absorbing part 82, and the other end thereof is connected to the absorbing part support body 84. The absorbing part support body 84 is a prismatic member elongated to the vertical direction. At a substantially center part of this absorbing part support body 84 in the vertical direction, a support arm 93 protruding in a hood shape toward a tool absorbing part 82 side is formed. This support arm 93 movably supports, in the vertical direction, a midway side of the tool absorbing part 82 in the vertical direction. In other words, a through hole oriented vertically is formed in a midway part of the support arm 93 as having a protruding shape, and the cylindrical-rod-shaped tool absorbing part 82 loosely fits into this through hole vertically.

At an upper part of the absorbing part support body 84, two hole connecting parts for vacuuming, that is, two joint parts including a first joint part 89 and a second joint part 90, are provided. The first joint part 89 is connected to a vacuum pump P, and the second joint part 90 is connected to the suction tube 83. And, between the first joint part 89 and the second joint part 90, a conduction passage 92 is formed so as to circulate inside the absorbing part support body 84, thereby allowing the tool absorbing part 82 to be suctioned by the vacuum pump P via the suction tube 83 and the conduction passage 92.

The lifting part 85 has an actuator 94 expandable to the vertical direction. This actuator 94 is formed of an air cylinder in the present embodiment, and has a cylinder chamber 95 formed inside the lifting part 85, a piston 96 movably arranged in the cylinder chamber in the vertical direction, an upper piping 97 for supplying air to an upper side of the piston 96 fitting into the cylinder chamber 95, and a lower piping 98 for supplying air to a lower side of the piston 96 in the cylinder chamber 95. And, this piston 96 provided inside the cylinder chamber 95 extends downward in the cylinder chamber 95 to be coupled to the upper part of the tool absorbing part 82, and allows the tool absorbing part 82 to vertically move in accordance with the ascent and descent of the piston 96.

That is, in the lifting part 85, when air is supplied to the upper side of the piston 96 in the cylinder chamber 95 through the upper piping 97, the pressure of the cylinder chamber 95 above the piston 96 increases, and the piston 96 moves downward. Here, the piston 96 is formed so as to extend downward more from the cylinder chamber 95, and a lower end of the piston 96 is provided with a coupling member 99 which couples and fixes the piston 96 at a lower end of the tool absorbing part 82. Thus, when the piston 96 moves downward, the tool absorbing part 82 fixed at the lower end of the piston 96 via the coupling member 99 also moves downward.

Also in the lifting part 85, when air is supplied to the lower side of the piston 96 in the cylinder chamber 95 through the lower piping 98, the pressure of the cylinder chamber 95 below the piston 96 increases, and the piston 96 moves upward. As a result, as with the case of descending, the piston 96 moves upward, and the tool absorbing part 82 coupled to the piston 96 also moves upward.

As described above, in the lifting part 85, with air supplied to either one of the upper piping 97 and the lower piping 98 or air exhausted from the other one, the piston 96 can be moved upward or downward, and the tool absorbing part 82 can also be moved upward or downward in accordance with this piston 96. Next, description is made to the tool change mechanism 30 provided to the scribe apparatus 1 of the present embodiment, in particular, the actuation mode of the transfer nozzle 81.

The cartridge 31 having the plurality of tools 8 accommodated therein is set on the base 32 provided to the side of the table 3, and is fixed by the clamp 33. While a rod 73 of an air cylinder 72 included in the remover 41 is extended upward by 20 mm, the first holding arm 44 and the second holding arm 48 are caused to ascend and be left from each other to become in an open state. Note that the amount of stroke of the rod 73 of the air cylinder 72 is merely an example.

The scribe head 7 is horizontally moved to descend to a position where the first holding arm 44 and the second holding arm 48 can nip the old tool 8a. While the rod 73 of the air cylinder 72 is pulled downward by 10 mm, the first holding arm 44 and the second holding arm 48 are caused to come close to each other, thereby nipping the old tool 8a. Furthermore, while the rod 73 is pulled downward by 10 mm, the first holding arm 44 and the second holding arm 48 are caused to descend as nipping the old tool 8a, thereby holding the old tool 8a as being nipped and pulling it from the holder joint 19. In this manner, the old tool 8a is removed from the scribe head 7.

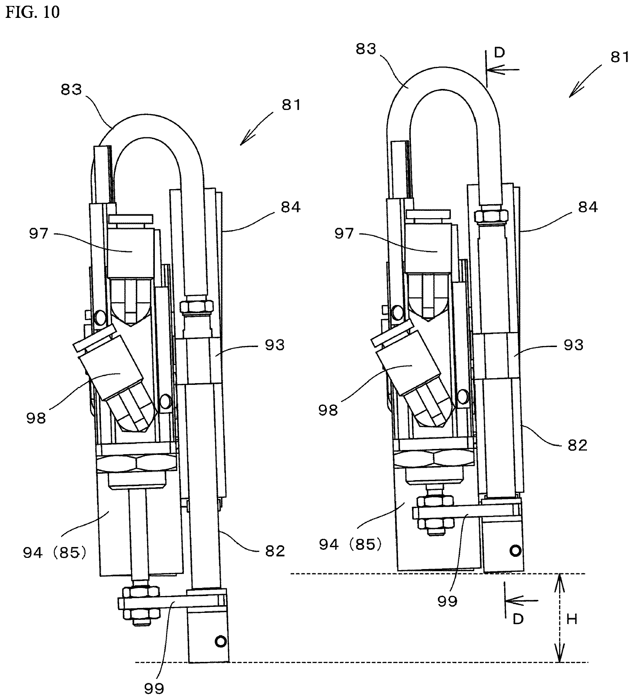

Here, consider a case in which the scribing tool 8 (old tool 8a) after use held in a state of being held by the first holding arm 44 and the second holding arm 48 on the remover 41 is moved to the cartridge 31. As depicted in FIG. 10, on the remover 41, the old tool 8a is nipped between the paired first holding arm 44 and second holding arm 48, and is held as being oriented above the base end side (upper end side). To the base end side of the old tool 8a held on the remover 41 in this manner, the transfer nozzle 81 is horizontally moved toward the x-axis direction so that the concave part 86 of the tool absorbing part 82 is positioned above the old tool 8a.

Note in the present embodiment that the transfer nozzle 81 is attached to the side (opposite side of the table 3) of the head unit 4 along the x-axis direction and the head unit 4 is movable along the x-axis direction along the guide provided to the beam by driving of the motor. Thus, if the head unit 4 is moved by a predetermined amount to a direction of approaching the table 3 along the x-axis direction, the tool absorbing part 82 can be positioned above the old tool 8a in a situation of being held by the remover 41.

When the tool absorbing part 82 is positioned above the old tool 8a, the tool absorbing part 82 is caused to descend by using the above-described lifting part 85. Specifically, air is sent to the upper side of the piston 96 in the cylinder chamber 95 through the upper piping 97, and air is purged from the lower side of the piston 96 in the cylinder chamber 95 through the lower piping 98. With this, the pressure on the upper side of the piston 96 in the cylinder chamber 95 increases, and the piston 96 moves downward by a height of H depicted in FIG. 10.

The lower end of the piston 96 is coupled to the lower end of the tool absorbing part 82 by using the coupling member 99. When the piston 96 moves downward, the tool absorbing part 82 movably attached to the absorbing part support body 84 to the vertical direction also moves downward. Thus, the tool absorbing part 82 can be made closer from above to the old tool 8a held with its base end side oriented upward on the remover 41. In this manner, the tool absorbing part 82 is caused by using the lifting part 85 to descend near the old tool 8a.

Here, while the rod 73 of the air cylinder 72 arranged in the remover 41 is extended upward by 10 mm, the first holding arm 44 and the second holding arm 48 holding the old tool 8a ascend. Then, the base end side of the old tool 8a is inserted into the concave part 86 of the tool absorbing part 82 and is covered as being surrounded from above. Furthermore, while the rod 73 is extended upward by 10 mm, the first holding arm 44 and the second holding arm 48 are left from each other to become open. Thus, the old tool 8a is released and, simultaneously, is absorbed into the concave part 86 of the tool absorbing part 82.

In this manner, the old tool 8a is absorbed by the actuation of the vacuum pump P and, simultaneously, the first holding arm 44 and the second holding arm 48 of the remover 41 are caused to swing to a direction of being left from each other to separate the old tool 8a from the remover 41. Note that the vacuum pump P is connected to the first joint part 89->the conduction passage 92 of the absorbing part support body 84->the second joint part 90->the suction tube 93->the through hole 87 of the tool absorbing part 82 in this order, and is connected to the concave part 86 of the tool absorbing part 82. Thus, with the actuation of the vacuum pump P, air in the concave part 86 can be suctioned, and the old tool 8a can be absorbed into the concave part 86.

As this vacuum pump P is being actuated, the tool absorbing part 82 absorbing the old tool 8a is moved by the lifting part 85 upward with respect to the absorbing part support part 84. Specifically, conversely to descending, air is sent from the lower piping 98 and air in the cylinder chamber 95 can be exhausted from the upper piping 97. With this, as with the case of descending, the pressure on the lower side of the piston 96 in the cylinder chamber 95 increases, the piston 96 moves upward with respect to the absorbing part support body 84, and the tool absorbing part 82 also ascends in accordance with the piston 96.

In this manner, when the tool absorbing part 82 absorbing the old tool 8a is caused to ascend by H to the z-axis direction and as the vacuum pup P is being actuated, the head unit 4 is moved to the x-axis direction along the guide provided to the beam by driving of the motor 4 to cause the tool absorbing part 82 to be positioned above a predetermined location of the cartridge 31. This cartridge 31 includes a plurality of storing locations for scribing tools 8 of different types, and the above-described cartridge 31 is also provided with storing locations individually.

Thus, if the tool absorbing part 82 is caused to descend by a procedure in reverse to that at the time of ascending to stop the vacuum pump P, the suction force for the old tool 8a is lost, and the old tool 8a moves by its own weight to a storing location, thereby allowing the old tool 8a to be transferred from the remover 41 to the storing location. Note that while the above-described procedure is to transfer the old tool 8a from the remover 41 to the cartridge 31, if operation is performed by a substantially reversed procedure, it is also possible to transfer new scribing tool 8 (new tool 8b) from the cartridge 31 to the remover 41.

Specifically, the transfer nozzle 81 is horizontally moved so that the concave part 86 of the tool absorbing part 82 is positioned above the new tool 8b with respect to the base end side of the new tool 8b prepared on the cartridge 31. When the tool absorbing part 82 becomes positioned above the new tool 8b, the tool absorbing part 82 is caused by using the lifting part 85 to descend to be made closer to the new tool 8b. The base end side of the new tool 8b is inserted into the concave part 86 of the tool absorbing part 82, and is covered so as to be surrounded from above. With the actuation of the vacuum pump P, the new tool 8b is absorbed inside the concave part 86 of the tool absorbing part 82.

As the vacuum pump P is being actuated, the tool absorbing part 82 absorbing the new tool 8b is caused to ascend to the z-axis direction by the height of H. That tool absorbing part 82 is horizontally moved to move the transfer nozzle 81 above the remover 41. Meanwhile, while the rod 73 of the air cylinder 72 included in the remover 41 is extended above by 20 mm, the first holding arm 44 and the second holding arm 48 are caused to ascend to become in an open state.

The tool absorbing part 82 is caused by using the lifting part 85 to descend to a position where the first holding arm 44 and the second holding arm 48 can nip the new tool 8b. While the rod 73 of the air cylinder 72 is pulled downward by 10 mm, the first holding arm 44 and the second holding arm 48 are caused to come close to each other, thereby nipping the new tool 8b. Furthermore, while the rod 73 is pulled downward by 10 mm, the first holding arm 44 and the second holding arm 48 nipping the new tool 8b are caused to descend, thereby holding the new tool 8b as being nipped and pulling it from the concave part 86 of the tool absorbing part 82. In this manner, the new tool 8b is removed from the transfer nozzle 81.

After the transfer nozzle 81 is moved to another position, the scribe head 7 is horizontally moved above the new tool 8b. Then, the scribe head 7 is caused to descend near the new tool 8b. While the rod 73 of the air cylinder 72 is extended upward by 10 mm, the first holding arm 44 and the second holding arm 48 holding the new tool 8b ascend. Then, the new tool 8b is inserted into the holder joint 19.

Furthermore, while the rod 73 is extended upward by 10 mm, the first holding arm 44 and the second holding arm 48 are left from each other to become open, thereby causing the new tool 8b to be released. Simultaneously, with attraction by the magnet 23, the new tool 8b is absorbed into the holder joint 19. Note that the new tool 8b is positioned by the parallel pin 24. A two-dimensional code printed on the new tool 8b is read by using a 2D code reader 71. From the read data, it is checked whether the tool 8 is correct. If it is correct, the process proceeds to actual operation.

Note in the remover 41 that instead of being held as being nipped by the first holding arm 44 and the second holding arm 48, the scribing tool 8 may be held as being inserted into a holding hole adjacent to these. According to the above-described scribe apparatus 1 of the present invention, although the structure is simple, the scribing tool 8 can be lifted as being suctioned from the remover 41 or the cartridge 31, and the suctioned scribing tool 8 can be reliably moved onto the remover 41 or the cartridge 31, thereby making it possible to easily and safely transfer the scribing tool 8 that is difficult to handle.

Note that the embodiment disclosed herein should be considered as being examples in all aspects and not restrictive.

For example, while a type is exemplarily described in the present embodiment in which the head unit 4 is attached as being tilted by two degrees, there is another type in which the head unit 2 is attached as being oriented toward a vertical direction. Also in this case, the technique of the present application is applicable.

### Reference Signs List

- 1: scribe apparatus
- 2: brittle material substrate
- 3: table (mount means)
- 4: head unit
- 5: block body
- 6: camera
- 7: scribe head
- 8: scribing tool
- 8a: old tool
- 8b: new tool
- 9: scribing wheel
- 10: main body part
- 11: side wall surface part
- 12: hood part
- 13: notched part
- 14: pin groove
- 15: pin
- 16: attachment part for positioning
- 17: flat surface
- 18: tilted surface
- 19: holder joint
- 20: bearing
- 21: holding part
- 22: opening
- 23: magnet
- 24: parallel pin
- 30: tool change mechanism
- 31: cartridge
- 32: base
- 33: clamp
- 41: remover
- 42: holding arm
- 44: first holding arm
- 45: nail part of the first holding arm
- 48: second holding arm
- 49: nail part of the second holding arm
- 52: cushion material
- 61: lifting member
- 71: 2D code reader
- 72: air cylinder
- 73: rod
- 81: transfer nozzle
- 82: tool absorbing part
- 83: suction tube
- 84: absorbing part support body
- 85: lifting part
- 86: concave part
- 87: through hole
- 88: retaining protrusion
- 89: first joint part
- 92: conduction passage
- 93: support arm
- 94: actuator
- 95: cylinder chamber
- 96: syringe
- 97: upper piping
- 98: lower piping
- 99: coupling member
- P: vacuum pump

## Claims

1. A tool (8, 9) change mechanism (30) configured to perform tool (8, 9) replacement by removing a scribing tool (8, 8a) attached to a holder joint (19) provided at a tip of a scribe head (7) of a scribe apparatus (1) from the holder joint (19) and attaching another scribing tool (8, 8b) to the holder joint (19), the tool (8, 9) change mechanism (30) included in the scribe apparatus (1) comprising:
a remover (41) which is configured to remove the scribing tool (8, 8a, 8b) from the holder joint (19);
a cartridge (31) having a plurality of said scribing tools (8, 8a, 8b) accommodated therein;
**characterized by**
a transfer nozzle (81) which is configured to move the scribing tool (8, 8a, 8b) between the remover (41) and the cartridge (31), wherein
the transfer nozzle (81) is configured to absorb the scribing tool (8, 8a, 8b) in an air suction manner, wherein
the transfer nozzle (81) is attached to a side of the scribe head (7), thereby being configured to move integrally with the scribe head (7), and
the transfer nozzle (81) includes a tool (8, 9) absorbing part (82) capable of absorbing the scribing tool (8, 8a, 8b) and moving to a vertical direction, a suction tube (83) capable of suctioning air from inside the tool (8, 9) absorbing part (82), an absorbing part support body (84) which is configured to movably support the tool (8, 9) absorbing part (82) to the vertical direction, and a lifting part (85) which is configured to cause the tool (8, 9) absorbing part (82) to ascend and descend to the vertical direction with respect to the absorbing part support body (84).

2. A scribe apparatus (1) comprising:
mount means (3) where a brittle material substrate (2) is mounted;
a scribe head (7) provided so as to be opposed to the brittle material substrate (2) on the mount means (3);
a holder joint (19) provided at a tip of the scribe head (7);
a scribing tool (8, 8a, 8b) removably attached to the holder joint (19) and including a scribing wheel (9) which is configured to form a scribe line on the brittle material substrate (2) on the mount means (3); and
a tool (8, 9) change mechanism (30) according to claim 1, and which is configured to perform tool (8, 9) replacement by removing the scribing tool (8, 8a) after use from the holder joint (19) and attaching another scribing tool (8, 8b) to the holder joint (19).

3. The scribe apparatus (1) according to claim 2, wherein the lifting part (85) has a cylinder chamber (95) formed inside the lifting part (85), a syringe (96) arranged in the cylinder chamber (95) so as to be movable in the vertical direction and extending downward to be coupled to an upper part of the tool (8, 9) absorbing part (82), an upper piping (97) configured to supply air to an upper side of the syringe (96) in the cylinder chamber (95), and a lower piping (98) configured to supply air to a lower side of the syringe (96) in the cylinder chamber (95).

4. The scribe apparatus (1) according to claim 2 or 3, wherein the tool (8, 9) absorbing part (82) has a concave part (86) open downward at a lower end of the tool (8, 9) absorbing part (82), and the concave part (86) is formed in a shape corresponding to a base (32) end side of the scribing tool (8, 8a, 8b).

5. The scribe apparatus (1) according to claim 2, wherein the remover (41) has paired holding arms (42, 42) which are configured to pick up and hold the scribing tool (8, 8a, 8b) when the scribing tool (8, 8a, 8b) is removed from the holder joint (19).

6. The scribe apparatus (1) according to claim 5, wherein the paired holding arms (42, 42) are arranged so as to be able to freely swing, and are configured to be changed between a closed state in which the paired holding arms (42, 42) are brought in contact together and closed to pick up and hold the scribing tool (8, 8a, 8b) and an open state in which the paired holding arms (42, 42) are separated.

7. The scribe apparatus (1) according to claim 6, wherein the paired holding arms (42, 42) can move by a driving part to the vertical direction via a lifting member (61).

8. The scribe apparatus (1) according to any of claims 5 to 7, wherein the paired holding arms (42, 42) each have, at a tip, a holding part (21) which is configured to pick up and hold the scribing tool (8, 8a, 8b), and a cushion material (52) for preventing damages on the scribing tool (8, 8a, 8b) is attached to the holding part (21).

## Patentansprüche

1. Wechselmechanismus (30) eines Werkzeugs (8, 9), der konfiguriert ist, einen Austausch eines Werkzeugs (8, 9) auszuführen, indem ein Anreißwerkzeug (8, 8a), das an einem Halteverbinder (19) befestigt ist, der bei einer Spitze eines Anreißkopfs (7) einer Anreißvorrichtung (1) vorgesehen ist, von dem Halteverbinder (19) entfernt wird und ein anderes Anreißwerkzeug (8, 8b) an dem Halteverbinder (19) befestigt wird, wobei der Wechselmechanismus (30) des Werkzeugs (8, 9), der in der Anreißvorrichtung (1) enthalten ist, Folgendes aufweist:
eine Entfernungseinrichtung (41), welche konfiguriert ist, das Anreißwerkzeug (8, 8a, 8b) von dem Halteverbinder (19) zu entfernen;
eine Kassette (31), die eine Vielzahl der Anreißwerkzeuge (8, 8a, 8b) hat, die darin aufgenommen sind;
**gekennzeichnet durch**
eine Transferdüse (81), welche konfiguriert ist, das Anreißwerkzeug (8, 8a, 8b) zwischen der Entfernungsvorrichtung (41) und der Kassette (31) zu bewegen, wobei
die Transferdüse (81) konfiguriert ist, das Anreißwerkzeug (8, 8a, 8b) auf eine luftaufsaugende Weise anzusaugen, wobei
die Transferdüse (81) an einer Seite des Anreißkopfs (7) befestigt ist, wodurch sie konfiguriert ist, sich mit dem Anreißkopf (7) einstückig zu bewegen, und
die Transferdüse (81) einen Ansaugteil (82) des Werkzeugs (8, 9), der in der Lage ist, das Anreißwerkzeug (8, 8a, 8b) anzusaugen und zu einer vertikalen Richtung zu bewegen, ein Saugrohr (83), das in der Lage ist, Luft von innerhalb des Ansaugteils (82) des Werkzeugs (8, 9) aufzusaugen, einen Ansaugteilstützkörper (84), welcher konfiguriert ist, den Ansaugteil (82) des Werkzeugs (8, 9) zu der vertikalen Richtung bewegbar abzustützen, und einen Hebeteil (85) aufweist, welcher konfiguriert ist, den Ansaugteil (82) des Werkzeugs (8, 9) zu veranlassen, sich in Bezug auf den Ansaugteilstützkörper (84) hinauf zu bewegen und herab zu bewegen.

2. Anreißvorrichtung (1) mit:
Montagemitteln (3), wo ein Substrat (2) eines spröden Materials montiert wird;
einem Anreißkopf (7), der so vorgesehen ist, um dem Substrat (2) des spröden Materials an den Montagemitteln (3) gegenüber zu liegen;
einem Halteverbinder (19), der bei einer Spitze des Anreißkopfs (7) vorgesehen ist;
einem Anreißwerkzeug (8, 8a, 8b), das an dem Halteverbinder (19) lösbar befestigt ist und ein Anreißrad (9) aufweist, welches konfiguriert ist, eine Anreißlinie auf dem Substrat (2) des spröden Materials an den Montagemitteln (3) auszubilden; und
einem Wechselmechanismus (30) eines Werkzeugs (8, 9) nach Anspruch 1 und welcher konfiguriert ist, einen Austausch eines Werkzeugs (8, 9) auszuführen, indem das Anreißwerkzeug (8, 8a) nach Gebrauch von dem Halteverbinder (19) entfernt wird und ein anderes Anreißwerkzeug (8, 8b) an dem Halteverbinder (19) befestigt wird.

3. Anreißvorrichtung (1) nach Anspruch 2, wobei der Hebeteil (85) eine Zylinderkammer (95), die innerhalb des Hebeteils (85) ausgebildet ist, einen Kolben (96), der in der Zylinderkammer (95) so angeordnet ist, um in der vertikalen Richtung bewegbar zu sein und sich nach unten hin zu erstrecken, um an einen oberen Teil des Ansaugteils (82) des Werkzeugs (8, 9) gekoppelt zu sein, eine obere Rohrleitung (97), die konfiguriert ist, einer oberen Seite des Kolbens (96) in der Zylinderkammer (95) Luft zuzuführen, und eine untere Rohrleitung (98) hat, die konfiguriert ist, einer unteren Seite des Kolbens (96) in der Zylinderkammer (95) Luft zuzuführen.

4. Anreißvorrichtung (1) nach Anspruch 2 oder 3, wobei der Ansaugteil (82) des Werkzeugs (8, 9) einen konkaven Teil (86) hat, der bei einem unteren Ende des Ansaugteils (82) des Werkzeugs (8, 9) nach unten hin geöffnet ist, und der konkave Teil (86) in einer Form ausgebildet ist, die einer Endseite einer Basis (32) des Anreißwerkzeugs (8, 8a, 8b) entspricht.

5. Anreißvorrichtung (1) nach Anspruch 2, wobei die Entfernungseinrichtung (41) paarweise Haltearme (42, 42) hat, welche konfiguriert sind, das Anreißwerkzeug (8, 8a, 8b) aufzunehmen und zu halten, wenn das Anreißwerkzeug (8, 8a, 8b) von dem Halteverbinder (19) entfernt wird.

6. Anreißvorrichtung (1) nach Anspruch 5, wobei die paarweisen Haltearme (42, 42) so angeordnet sind, um in der Lage zu sein, frei zu schwenken, und konfiguriert sind, zwischen einem geschlossenen Zustand, in welchem die paarweisen Haltearme (42, 42) zusammen in Kontakt gebracht sind und geschlossen sind, um das Anreißwerkzeug (8, 8a, 8b) aufzunehmen und zu halten, und einem offenen Zustand zu wechseln, in welchem die paarweisen Haltearme (42, 42) getrennt sind.

7. Anreißvorrichtung (1) nach Anspruch 6,
wobei sich die paarweisen Haltearme (42, 42) durch einen Antriebsteil über ein Hebeelement (61) zu der vertikalen Richtung bewegen können.

8. Anreißvorrichtung (1) nach einem der Ansprüche 5 bis 7, wobei die paarweisen Haltearme (42, 42) bei einer Spitze jeweils einen Halteteil (21) haben, welcher konfiguriert ist, das Anreißwerkzeug (8, 8a, 8b) aufzunehmen und zu halten, und ein Dämpfungsmaterial (52) zum Verhindern von Schäden an dem Anreißwerkzeug (8, 8a, 8b) an dem Halteteil (21) befestigt ist.

## Revendications

1. Mécanisme de changement (30) d'outil (8, 9) conçu pour effectuer un remplacement d'outil (8, 9) en retirant un outil de traçage (8, 8a) fixé à une articulation support (19) situé à une extrémité d'une tête de traçage (7) d'un appareil de traçage (1) de l'articulation support (19) et en fixant un autre outil de traçage (8, 8b) à l'articulation support (19), le mécanisme de changement (30) d'outil (8, 9) inclus dans l'appareil de traçage (1) comprenant :
un extracteur (41) conçu pour retirer l'outil de traçage (8, 8a, 8b) de l'articulation support (19) ;
une cartouche (31) au sein de laquelle sont logés une pluralité d'outils de traçage (8, 8a, 8b) ;
**caractérisé par**
une buse de transfert (81) conçue pour déplacer l'outil de traçage (8, 8a, 8b) entre l'extracteur (41) et la cartouche (31),
la buse de transfert (81) étant conçue pour absorber l'outil de traçage (8, 8a, 8b) par aspiration d'air,
la buse de transfert (81) étant fixée à un côté de la tête de traçage (7), étant ainsi conçue pour se déplacer d'un seul tenant avec la tête de traçage (7), et
la buse de transfert (81) comprenant une partie absorbante (82) d'outil (8, 9) pouvant absorber l'outil de traçage (8, 8a, 8b) et se déplacer vers une direction verticale, un tube d'aspiration (83) pouvant aspirer l'air à l'intérieur de la partie absorbante (82) d'outil (8, 9), un corps de support (84) de partie absorbante conçu pour soutenir de manière mobile la partie absorbante (82) d'outil (8, 9) dans la direction verticale, et une partie de levage (85) conçue pour amener la partie absorbante (82) d'outil (8, 9) à monter et à descendre dans la direction verticale par rapport au corps de support (84) de partie absorbante.

2. Appareil de traçage (1) comprenant :
un moyen de montage (3) sur lequel est monté un substrat en matériau fragile (2) ;
une tête de traçage (7) fournie de sorte à être opposée au substrat en matériau fragile (2) sur le moyen de montage (3) ;
une articulation support (19) située à une extrémité de la tête de traçage (7) ;
un outil de traçage (8, 8a, 8b) fixé de manière amovible à l'articulation support (19) et comprenant une roue de traçage (9) conçue pour former une ligne de traçage sur le substrat en matériau fragile (2) sur le moyen de montage (3) ; et
un mécanisme de changement (30) d'outil (8, 9) selon la revendication 1, et qui est conçu pour effectuer le remplacement de l'outil (8, 9) en retirant l'outil de traçage (8, 8a) après utilisation de l'articulation support (19) et en fixant un autre outil de traçage (8, 8b) à l'articulation support (19).

3. Appareil de traçage (1) selon la revendication 2, la partie de levage (85) ayant une chambre cylindrique (95) formée à l'intérieur de la partie de levage (85), une seringue (96) située dans la chambre cylindrique (95) de sorte à être mobile dans la direction verticale et s'étendant vers le bas pour être accouplée à une partie supérieure de la partie absorbante (82) d'outil (8, 9), un tuyau supérieur (97) conçu pour alimenter en air un côté supérieur de la seringue (96) dans la chambre cylindrique (95), et un tuyau inférieur (98) conçu pour alimenter en air un côté inférieur de la seringue (96) dans la chambre cylindrique (95).

4. Appareil de traçage (1) selon la revendication 2 ou 3, la partie absorbante (82) d'outil (8, 9) ayant une partie concave (86) ouverte vers le bas à une extrémité inférieure de la partie absorbante (82) d'outil (8, 9), et la partie concave (86) ayant une forme correspondant à un côté d'extrémité de base (32) de l'outil de traçage (8, 8a, 8b).

5. Appareil de traçage (1) selon la revendication 2, l'extracteur (41) ayant des bras de maintien appariés (42, 42) qui sont conçus pour saisir et maintenir l'outil de traçage (8, 8a, 8b) lorsque l'outil de traçage (8, 8a, 8b) est retiré de l'articulation support (19).

6. Appareil de traçage (1) selon la revendication 5, les bras de maintien appariés (42, 42) étant disposés de sorte à pouvoir pivoter librement et étant conçus pour passer d'un état fermé dans lequel les bras de maintien appariés (42, 42) sont mis en contact et fermés pour saisir et maintenir l'outil de traçage (8, 8a, 8b) à un état ouvert dans lequel les bras de maintien appariés (42, 42) sont séparés.

7. Appareil de traçage (1) selon la revendication 6, les bras de maintien appariés (42, 42) pouvant être déplacés par une partie d'entraînement dans la direction verticale par l'intermédiaire d'un élément de levage (61).

8. Appareil de traçage (1) selon l'une quelconque des revendications 5 à 7, les bras de maintien appariés (42, 42) ayant chacun, à une extrémité, une partie de maintien (21) qui est conçue pour saisir et maintenir l'outil de traçage (8, 8a, 8b), et un matériau de rembourrage (52) pour prévenir des dommages sur l'outil de traçage (8, 8a, 8b) étant fixé à la partie de maintien (21).
